(19) Europäisches Patentamt
European Patent Office
Office européen des brevets

(11) **EP 4 610 940 B1**

(12) **EUROPEAN PATENT SPECIFICATION**

(45) Date of publication and mention
of the grant of the patent:
**27.05.2026 Bulletin 2026/22**

(21) Application number: **24209443.1**

(22) Date of filing: **29.10.2024**

(51) International Patent Classification (IPC):
**G06V 20/56** (2022.01)    **G06V 10/80** (2022.01)
**G06V 10/774** (2022.01)    **G06N 3/045** (2023.01)
**G06V 10/82** (2022.01)    **G06T 7/50** (2017.01)
**G01S 17/931** (2020.01)    **G01S 17/89** (2020.01)

(52) Cooperative Patent Classification (CPC):
**G06V 20/56; G01S 17/89; G01S 17/931;
G06N 3/045; G06T 7/50; G06V 10/774;
G06V 10/803; G06V 10/82;** G06T 2207/10028;
G06T 2207/20081; G06T 2207/20084

(54) **APPARATUS FOR CONTROLLING VEHICLE AND METHOD THEREOF**

VORRICHTUNG ZUR STEUERUNG EINES FAHRZEUGS UND VERFAHREN DAFÜR

APPAREIL DE COMMANDE DE VÉHICULE ET PROCÉDÉ ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.02.2024 KR 20240029182**

(43) Date of publication of application:
**03.09.2025 Bulletin 2025/36**

(73) Proprietors:
• **Hyundai Motor Company
Seoul 06797 (KR)**
• **Kia Corporation
Seocho-gu
Seoul 06797 (KR)**

(72) Inventors:
• **Kim, Jin Sol
18280 Gyeonggido (KR)**
• **Ka, Woong Hyun
18280 Gyeonggido (KR)**
• **Kim, Jang Yoon
18280 Gyeonggido (KR)**
• **Bae, Jin Woo
18280 Gyeonggido (KR)**

(74) Representative: **Hoffmann Eitle
Patent- und Rechtsanwälte PartmbB
Arabellastraße 30
81925 München (DE)**

(56) References cited:
**CN-A- 117 115 359    US-A1- 2022 309 693**

• **DHAKAL SUDIP ET AL: "VirtualPainting:
Addressing Sparsity with Virtual Points and
Distance-Aware Data Augmentation for 3D
Object Detection", ARXIV.ORG, 26 December
2023 (2023-12-26), pages 1 - 10, XP093253634,
Retrieved from the Internet <URL:https://arxiv.
org/html/2312.16141v1> [retrieved on 20250226]**
• **LIANG MING ET AL: "Multi-Task Multi-Sensor
Fusion for 3D Object Detection", 2019 IEEE/CVF
CONFERENCE ON COMPUTER VISION AND
PATTERN RECOGNITION (CVPR), 15 June 2019
(2019-06-15), IEEE, Los Alamitos, CA, USA,
pages 7337 - 7345, XP033687125, DOI: 10.1109/
CVPR.2019.00752**
• **SHUHAN SHEN: "Accurate Multiple View 3D
Reconstruction Using Patch-Based Stereo for
Large-Scale Scenes", IEEE TRANSACTIONS ON
IMAGE PROCESSING, vol. 22, no. 5, 1 May 2013
(2013-05-01), IEEE, USA, pages 1901 - 1914,
XP011497304, ISSN: 1057-7149, DOI: 10.1109/
TIP.2013.2237921**

**Description**

## CROSS-REFERENCE TO RELATED APPLICATION

This application claims the benefit of priority to Korean Patent Application No. 10-2024-0029182, filed in the Korean Intellectual Property Office on February 28, 2024.

## TECHNICAL FIELD

The present invention relates to a vehicle control apparatus and a method thereof, and more specifically, relates to a technology related to a neural network model.

## BACKGROUND

In recent years, a research on a vehicle autonomous driving technology and/or a vehicle driving assistance technology has progressed, and a technology for identifying an external object by using a sensor (e.g., camera, LiDAR, and/or radar) included in a vehicle is actively researched.

In particular, due to the lack of a database (DB) for blind spots of a LiDAR, a neural network model is being trained by using a relatively unrealistic dataset. Accordingly, there is a need to improve the recognition performance of the neural network model by accounting for the blind spots of the LiDAR. The paper by Dhakal Sudip et al "VirtualPainting: Addressing Sparsity with Virtual Points and Distance-Aware Data Augmentation for 3D Object Detection", arXiv.org, 26 December 2023 (2023-12-26), pages 1-10, XP093253634, addresses the problem of sparse LiDAR points by generating virtual points using depth completion networks PENET and propose a simple yet effective "VirtualPainting" framework. The generation of supplementary virtual points is initiated, and they are seamlessly merged with the original points, resulting in an augmented LiDAR point cloud dataset. This augmented dataset subsequently undergoes a "painting" process utilizing features derived from cameras. The camera-derived features are in the form of semantic scores or per-pixel class scores. The augmented LiDAR point cloud is concatenated with per pixel class score to obtain a feature-rich point cloud. The paper by Liang Ming et al "Multi-Task Multi-Sensor Fusion for 3D Object Detection", 2019 IEEE/CVF CONFERENCE ON COMPUTER VISION AND PATTERN RECOGNITION (CVPR), 15 June 2019 (2019-06-15), pages 7337-7345, XP033687125, IEEE, Los Alamitos, CA, USA DOI: 10.1109/CVPR.2019.00752 exploits multiple related tasks for accurate multi-sensor 3D object detection. Towards this goal an end-to-end learnable architecture is presented that reasons about 2D and 3D object detection as well as ground estimation and depth completion. Experiments show that all these tasks are complementary and help the network learn better representations by fusing information at various levels.

## SUMMARY

The present invention was made to solve the above-mentioned problems occurring in the prior art while advantages achieved by the prior art are maintained intact. The invention is defined by the independent claims. Advantageous embodiments are presented in the dependent claims.

An aspect of the present invention provides a vehicle control apparatus for improving training and/or inference of a neural network model (e.g., a monocular depth estimation (MDE) network), and a method thereof.

An aspect of the present invention provides a vehicle control apparatus for accurately predicting a distance between a vehicle and an external object by using an image obtained through a camera, by creating virtual points in blind spots of a LiDAR and training a neural network model by using a point cloud by the created virtual points, and a method thereof.

An aspect of the present invention provides a vehicle control apparatus for obtaining a dense depth map for effectively training the neural network model, and a method thereof.

The technical problems to be solved by the present invention are not limited to the aforementioned problems, and any other technical problems not mentioned herein will be clearly understood from the following description by those skilled in the art to which the present invention pertains.

According to one or more example embodiments of the present disclosure, a vehicle control apparatus may include: a memory in which neural network models are stored; a light detection and ranging (LiDAR) device; a camera; and a processor. The processor may be configured to: obtain, via the LiDAR device, a first point cloud; generate, based on the first point cloud, a first sparse depth map; obtain, via the camera, an image; generate segmentation information by classifying a type of at least one pixel included in the image; generate a second point cloud by forming virtual points corresponding to a ground included in a blind spot of the LiDAR; generate, based on the second point cloud and the segmentation information, a second sparse depth map; generate, based on synthesizing the first sparse depth map and the second sparse depth map, a third sparse depth map; generate a first dense depth map based on inputting the third sparse depth map and the image into a first neural network model among the neural network models; generate a second dense depth map by removing at least one point from the first dense depth map, based on at least one of a confidence level, segmentation information, a noise, or a region of interest (ROI) of at least one point included in the first dense depth map; train, based on the second dense depth map, a second neural network model, which is different from the first neural network model, from among the neural network models; and control a vehicle based on the second dense depth map.

The processor may be configured to generate the first sparse depth map by: converting the first point cloud, which is expressed in a LiDAR device coordinate system based on a location of the LiDAR device, into points expressed in a camera coordinate system based on a location of the camera.

The processor may be configured to generate the second sparse depth map by: converting the second point cloud, which is expressed in a vehicle coordinate system for the vehicle, into points expressed in a camera coordinate system based on a location of the camera.

The processor may be configured to generate the second dense depth map by: determining the confidence level of at least one point included in the first dense depth map; and removing, from the first dense depth map, a point, of which the confidence level is less than a threshold value, from among points included in the first dense depth map.

The processor may be configured to generate the second dense depth map by: determining, in the first dense depth map, at least one pixel associated with a designated type among a plurality of types based on the segmentation information; and removing, from the first dense depth map, at least one point corresponding to the at least one pixel associated with the designated type.

The processor may be configured to generate the second dense depth map by: removing the noise from the first dense depth map; and selecting the ROI, from which the noise is removed, in the first dense depth map.

The blind spot includes an area, which the LiDAR device is incapable of rendering, in the ground. The processor is further configured to: generate the virtual points associated with the area.

The processor may be configured to generate the third sparse depth map by: determining a plurality of first points included in the first sparse depth map; determining a plurality of second points included in the second sparse depth map; selecting at least part of the plurality of first points, which overlap at least part of the plurality of second points, as a first set; selecting a remaining part of the plurality of second points, which do not overlap the first set, as a second set; and generating the third sparse depth map further based on the first set and the second set.

The processor is configured to train the second neural network model by: training the second neural network model further based on supervised learning using the second dense depth map as ground truth (GT).

The first neural network model uses, as inputs, the image and the third sparse depth map. The second neural network model may output, using the image as an input, a depth map indicating a distance between objects, included in the image, and the vehicle.

According to one or more example embodiments of the present disclosure, a method includes : generating, by a processor, a first sparse depth map based on a first point cloud obtained through a LiDAR device; generating segmentation information by classifying a type of at least one pixel included in an image obtained via a camera; generating a second point cloud by forming virtual points corresponding to a ground included in a blind spot of the LiDAR device; generating, based on the second point cloud and the segmentation information, a second sparse depth map; generating, based on synthesizing the first sparse depth map and the second sparse depth map, a third sparse depth map; generating a first dense depth map based on inputting the third sparse depth map and the image into a first neural network model among neural network models; generating a second dense depth map by removing at least one point from the first dense depth map, based on at least one of a confidence level, segmentation information, a noise, or a region of interest (ROI) of at least one point included in the first dense depth map; training, based on the second dense depth map, a second neural network model, which is different from the first neural network model, from among the neural network models; and controlling a vehicle based on the second dense depth map.

The method may further include: converting the first point cloud, which is expressed in a LiDAR device coordinate system based on a location of the LiDAR device, into points expressed in a camera coordinate system based on a location of the camera.

The method may further include: converting the second point cloud, which is expressed in a vehicle coordinate system for the vehicle, into points expressed in a camera coordinate system based on a location of the camera.

The method may further include: determining the confidence level of at least one point included in the first dense depth map; and removing, from the first dense depth map, a point, of which the confidence level is less than a threshold value, from among points included in the first dense depth map.

The method may further include: determining, in the first dense depth map, at least one pixel associated with a designated type among a plurality of types based on the segmentation information; and removing, from the first dense depth map, at least one point corresponding to the at least one pixel associated with the designated type.

The method may further include: removing the noise from the first dense depth map; and selecting the ROI, from which the noise is removed, in the first dense depth map.

The blind spot includes an area, which the LiDAR device is incapable of rendering, in the ground. The method may further include: generating the virtual points associated with the area.

The method may further include: determining a plurality of first points included in the first sparse depth map; determining a plurality of second points included in the second sparse depth map; selecting at least part of the plurality of first points, which overlap at least part of the plurality of second points, as a first set; and selecting a remaining part of the plurality of second points, which do not overlap the first set, as a second set. Generating the third sparse depth map may be further based on the first set and the second set.

Training the second neural network model may be further based on supervised learning using the second dense depth map as GT.

The first neural network model uses, as inputs, the image and the third sparse depth map. The second neural network model may output, using the image as an input, a depth map indicating a distance between objects, included in the image, and the vehicle.

## BRIEF DESCRIPTION OF THE DRAWINGS

The above and other objects, features and advantages of the present invention will be more apparent from the following detailed description taken in conjunction with the accompanying drawings:

FIG. 1 shows an example of a block diagram associated with a vehicle control apparatus;
FIG. 2 shows an example, in which a vehicle control apparatus obtains a dense depth map for training a neural network model;
FIG. 3 shows an example, in which a vehicle control apparatus trains a neural network model;
FIG. 4 shows an example of creating virtual points;
FIG. 5 shows an example of projecting created virtual points onto an image;
FIG. 6 shows an example of a flowchart associated with a vehicle control method; and
FIG. 7 shows a computing system associated with a vehicle control apparatus or vehicle control method.

## DETAILED DESCRIPTION

Hereinafter, some embodiments of the present invention will be described in detail with reference to the accompanying drawings. In adding reference numerals to components of each drawing, it should be noted that the same components include the same reference numerals, although they are indicated on another drawing. Furthermore, in describing the embodiments of the present disclosure, detailed descriptions associated with well-known functions or configurations will be omitted if they may make subject matters of the present disclosure unnecessarily obscure.

In describing elements of an embodiment of the present disclosure, the terms first, second, A, B, (a), (b), and the like may be used herein. These terms are only used to distinguish one element from another element, but do not limit the corresponding elements irrespective of the nature, order, or priority of the corresponding elements. Furthermore, unless otherwise defined, all terms including technical and scientific terms used herein are to be interpreted as is customary in the art to which the present disclosure belongs. It will be understood that terms used herein should be interpreted as including a meaning that is consistent with their meaning in the context of the present disclosure and the relevant art and will not be interpreted in an idealized or overly formal sense unless expressly so defined herein.

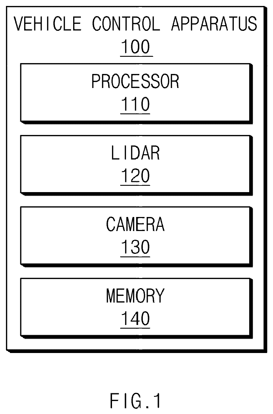

Hereinafter, embodiments of the present disclosure will be described in detail with reference to FIGS. 1 to 7.

FIG. 1 shows an example of a block diagram associated with a vehicle control apparatus.

Referring to FIG. 1, a vehicle control apparatus 100 according to an embodiment of the present disclosure may be implemented inside or outside a vehicle, and some of components included in the vehicle control apparatus 100 may be implemented inside or outside the vehicle. At this time, the vehicle control apparatus 100 may be integrated with internal control units of a vehicle and may be implemented with a separate device so as to be coupled with control units of the vehicle by means of a separate connection means. For example, the vehicle control apparatus 100 may further include components not shown in FIG. 1.

Referring to FIG. 1, a vehicle control apparatus 100 according to an embodiment includes a processor 110, a LiDAR 120, a camera 130, and a memory 140. The processor 110, the LiDAR 120, the camera 130, or the memory 140 may be electrically and/or operably coupled with each other by an electronic component including a communication bus.

Hereinafter, the fact that pieces of hardware are coupled operably may include the fact that a direct and/or indirect connection between the pieces of hardware is established by wired and/or wirelessly such that second hardware is controlled by first hardware among the pieces of hardware.

Although different blocks are shown, an embodiment is not limited thereto. For example, some of the pieces of hardware in FIG. 1 may be included in a single integrated circuit including a system on a chip (SoC). The type and/or number of hardware included in the vehicle control apparatus 100 is not limited to that shown in FIG. 1. For example, the vehicle control apparatus 100 may include only some of the pieces of hardware shown in FIG. 1.

The vehicle control apparatus 100 according to an embodiment may include hardware for processing data based on one or more instructions. The hardware for processing data may include the processor 110. For example, the hardware for processing data may include an arithmetic and logic unit (ALU), a floating point unit (FPU), a field programmable gate array (FPGA), a central processing unit (CPU), and/or an application processor (AP).

For example, the processor 110 may include a structure of a single-core processor, or may include a structure of a multi-core processor including a dual core, a quad core, a hexa core, or an octa core.

The LiDAR 120 of the vehicle control apparatus 100 according to an embodiment may obtain data sets obtained by identifying objects surrounding the vehicle control apparatus 100 (or a vehicle including the vehicle control apparatus 100). For example, the LiDAR 120 may identify at least one of a location of the surrounding object, a movement direction of the surrounding object, or speed of the surrounding object, or any combination thereof based on a pulse laser signal emitted from the LiDAR 120 being reflected by the surrounding object and returned.

For example, the LiDAR 120 may obtain data sets for expressing an external object in the space defined by an x-axis, a y-axis, and a z-axis based on a pulse laser signal reflected from surrounding objects. For example, the LiDAR 120 may obtain data sets including a plurality of points in the space, which is formed by the x-axis, the y-axis, and the z-axis, based on receiving the pulse laser signal at a specified period.

The processor 110 included in the vehicle control apparatus 100 according to an embodiment may emit light from a vehicle by using the LiDAR 120. For example, the processor 110 may receive light emitted from the vehicle. For example, the processor 110 may identify at least one of a location, a speed, or a moving direction, or any combination thereof of a surrounding object based on a time required to transmit light emitted from the vehicle and a time required to receive light emitted from the vehicle.

For example, the processor 110 may obtain data sets including a plurality of points based on the time required to transmit light emitted from the vehicle and the time required to receive light emitted from the vehicle. The processor 110 may obtain data sets for expressing a plurality of points in a three-dimensional virtual coordinate system including the first axis, the second axis, and the third axis.

The camera 130 included in the vehicle control apparatus 100 according to an embodiment may include one or more optical sensors (e.g., a charged coupled device (CCD) sensor or a complementary metal oxide semiconductor (CMOS) sensor) that generate electrical signals indicating the color and/or brightness of light.

For example, a plurality of optical sensors included in the camera 130 may be arranged in a form of a 2-dimensional array. The camera 130 may obtain electrical signals from a plurality of optical sensors substantially simultaneously and may generate images or frames, each of which corresponds to light reaching optical sensors in two-dimensional grids and each of which includes a plurality of pixels arranged in two dimensions.

For example, photo data captured by using the camera 130 may refer to a plurality of images obtained from the camera 130.

For example, video data captured by using the camera 130 may mean the sequence of a plurality of images obtained from the camera 130 at a designated frame rate.

The memory 140 of the vehicle control apparatus 100 according to an embodiment may include a hardware component for storing data and/or instructions that are to be input and/or output to the processor 110 of the vehicle control apparatus 100.

For example, the memory 140 may include at least one of a volatile memory including a random-access memory (RAM), or a non-volatile memory including a read-only memory (ROM), or any combination thereof.

For example, the volatile memory may include at least one of a dynamic RAM (DRAM), a static RAM (SRAM), a cache RAM, or a pseudo SRAM (PSRAM), or any combination thereof.

For example, the non-volatile memory includes at least one of a programmable ROM (PROM), an erasable PROM (EPROM), an electrically erasable PROM (EEPROM), a flash memory, a hard disk, a compact disk, a solid state drive (SSD), or an embedded multi-media card (eMMC), or any combination thereof. For example, neural network models may be stored in the memory 140. A first neural network model among the neural network models includes a model for obtaining a dense depth map. A second neural network model among neural network models includes a model for estimating a distance between an external object and a vehicle including the camera 130 based on an image obtained through the camera 130. A depth map may be an image (or image channel) that includes information relating to the distance of surfaces of one or more objects from a viewpoint. A depth map may be rendered by obtaining a plurality of images from one or more viewpoints and determining a distance from one or more pixel to one or more image sensors (e.g., cameras).

The first neural network model uses the image and a sparse depth map as inputs. For example, the second neural network model may output a depth map indicating the distance between objects displayed in the image and the vehicle including the camera 130, by using the image as an input.

In the present disclosure, it is expressed as a neural network model, but an embodiment is not limited thereto. For example, the neural network model may include at least one of a multilayer perceptron (MLP), a convolution neural network (CNN), a recurrent neural network (RNN), or a transformer, or any combination thereof. Moreover, the neural network model of the present disclosure may include a deep-learning-based MDE model.

The processor 110 of the vehicle control apparatus 100 according to an embodiment obtains a first point cloud through the LiDAR 120. The processor 110 obtains the first sparse depth map based on obtaining the first point cloud through the LiDAR 120.

In an embodiment, the processor 110 may identify a LiDAR coordinate system based on the location of the LiDAR 120. The processor 110 may convert the first point cloud, which is expressed in the LiDAR coordinate system based on the location of the LiDAR 120, into points expressed in a camera coordinate system based on the location of the camera 130.

For example, the processor 110 may obtain a first sparse depth map based on converting the first point cloud, which is expressed in the LiDAR coordinate system based on the location of the LiDAR 120, into points expressed in the camera coordinate system based on the location of the camera 130.

For example, the LiDAR coordinate system may include a coordinate system expressed around the optical axis of the LiDAR 120. For example, the camera coordinate system may include a coordinate system expressed around the optical axis of the camera 130.

For example, the first point cloud may be obtained based on a plurality of points obtained through the LiDAR 120.

In the claimed embodiment, the processor 110 obtains an image through the camera 130. The processor 110 obtains segmentation information obtained by analyzing the type of each of pixels, which are included in the image, based on obtaining the image through the camera 130. For example, the segmentation information may be generated to correspond to each of the pixels. For example, the segmentation information may include information obtained by classifying the type of each of the pixels.

For example, the type of each of the pixels may include at least one of a ground, sky, or an external object different from the ground, or any combination thereof. For example, the external object different from the ground may include at least one of a commercial vehicle, a passenger vehicle, a pedestrian, a building, a traffic light, or a sign, or any combination thereof. However, an embodiment of the present disclosure is not limited to the above description.

In an embodiment, the processor 110 generates virtual points corresponding to the ground included in the blind spot of the LiDAR 120. The blind spot includes an area of the ground incapable of being expressed by the LiDAR 120. The processor 110 generates a second point cloud based on creating virtual points with respect to areas of the ground incapable of being expressed by the LiDAR 120.

For example, the processor 110 may project at least one of the virtual points, or the second point cloud, or any combination thereof onto the image.

The processor 110 generates the second point cloud formed by the virtual points corresponding to the ground included in the blind spot. The processor 110 obtains a second sparse depth map based on the second point cloud and the segmentation information.

The processor 110 obtains a second sparse depth map by using the second point cloud and the segmentation information based on generating the second point cloud formed by the virtual points corresponding to the ground included in the blind spot.

In an embodiment, the processor 110 may obtain a second point cloud based on a vehicle coordinate system formed based on a vehicle. The processor 110 may obtain the second sparse depth map based on converting the second point cloud based on the vehicle coordinate system formed based on the vehicle into points expressed in the camera coordinate system based on the location of the camera 130.

For example, the vehicle coordinate system may include a coordinate system expressed based on the center of a front bumper of the vehicle. For example, the vehicle coordinate system may include a coordinate system in which the center of the front bumper of the vehicle is set as the origin, the vertical axis of the vehicle is set as the x-axis, and the horizontal axis of the vehicle is set as the y-axis.

In the claimed embodiment, the processor 110 synthesizes a first sparse depth map and a second sparse depth map. The processor 110 obtains a third sparse depth map based on synthesizing the first sparse depth map and the second sparse depth map.

In an embodiment, the processor 110 may identify a plurality of first points included in the first sparse depth map. The processor 110 may identify a plurality of second points included in the second sparse depth map.

For example, the processor 110 may select at least part of the plurality of first points, which overlap at least part of the plurality of second points, from among the plurality of first points as a first set. The processor 110 may select the plurality of second points, which do not overlap the plurality of first points, as a second set.

The processor 110 obtains a third sparse depth map based on the first set and the second set. For example, the processor 110 may obtain the third sparse depth map including both the first set and the second set. For example, the processor 110 may obtain the third sparse depth map including both the plurality of first points and the plurality of second points.

In the claimed embodiment, the processor 110 inputs the third sparse depth map and the image into the first neural network model among the neural network models. The processor 110 obtains a first dense depth map based on inputting the third sparse depth map and the image into the first neural network model among the neural network models.

In the claimed embodiment, the processor 110 identifies at least one of confidence, segmentation information, noise, or region of interest (ROI), or any combination thereof for each point included in the first dense depth map. The processor 110 obtains a second dense depth map, in which at least one point is removed from the first dense depth map, based on at least one of the confidence, the segmentation information, noise, or the ROI, or any combination thereof of each of the points included in the first dense depth map.

In an embodiment, the processor 110 may identify the confidence of each of points included in the first dense depth map. For example, the processor 110 may remove points, the confidence of each of which is less than reference confidence, from among points included in the first dense depth map from the first dense depth map. For example, the processor 110 may obtain the second dense depth map based on removing points, the confidence of each of which is less than the reference confidence, from among the points included in the first dense depth map from the first dense depth map.

In an embodiment, in the first dense depth map, the processor 110 may identify at least one pixel with a designated type among a plurality of types based on the segmentation information. For example, the processor 110 may identify at least one point corresponding to at least one pixel with the designated type. The processor 110 may remove at least one point corresponding to at least one pixel with the designated type from the first dense depth map. The processor 110 may obtain the second dense depth map based on removing at least one point corresponding to at least one pixel with the designated type from the first dense depth map.

In an embodiment, the processor 110 may remove noise from the first dense depth map. For example, the processor 110 may select an ROI from the first dense depth map from which noise is removed. The processor 110 may obtain the second dense depth map based on selecting the ROI from the first dense depth map from which the noise is removed.

For example, the processor 110 may select the ROI based on sequentially removing a point, of which the confidence is less than the reference confidence, a point corresponding to the designated type, and the noise. The processor 110 may obtain a second dense depth map by selecting the ROI based on sequentially removing a point of which the confidence is less than the reference confidence, a point corresponding to the designated type, and the noise.

For example, the second dense depth map may include a depth map in which depth is formed for each of the pixels. For example, the depth in a sparse depth map may be formed in some of the pixels, but the depth in a dense depth map may be formed in all pixels.

In the claimed embodiment, the processor 110 trains the second neural network model different from the first neural network model among the neural network models.

In the claimed embodiment, the processor 110 uses the second dense depth map as ground truth (GT). For example, the processor 110 may perform supervised learning by using the second dense depth map as GT. For example, the processor 110 may train the second neural network model based on the supervised learning that uses the second dense depth map as GT.

In the claimed embodiment, the processor 110 outputs depth information indicating a distance between the vehicle including the camera 130 and an external object based on inputting the image obtained through the camera 130 into the trained second neural network model. The processor 110 may assist the driving of the vehicle based on depth information indicating the distance between the vehicle and the external object. The processor 110 may perform autonomous driving of the vehicle based on the depth information indicating the distance between the vehicle and the external object.

As mentioned above, the processor 110 of the vehicle control apparatus 100 according to the claimed embodiment trains the second neural network model based on the second dense depth map. The processor 110 of the vehicle control apparatus 100 may relatively accurately identify a distance if identifying the distance between the vehicle and the external object by using an image, by training the second neural network model based on the second dense depth map.

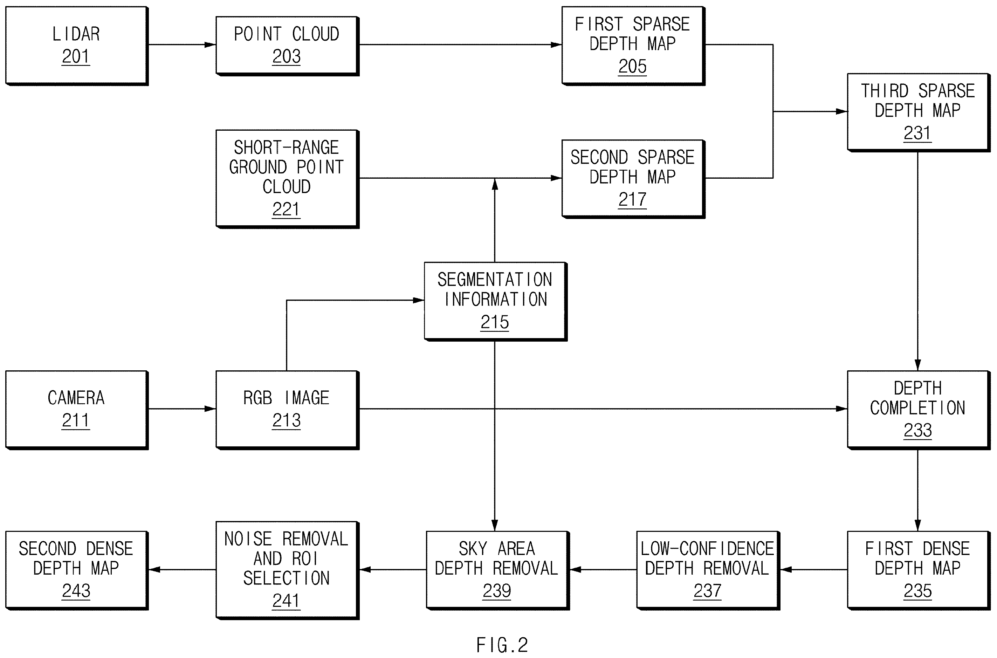

FIG. 2 shows an example, in which a vehicle control apparatus obtains a dense depth map for training a neural network model, according to an embodiment of the present disclosure.

Referring to FIG. 2, a vehicle control apparatus (e.g., the vehicle control apparatus 100 of FIG. 1) according to an embodiment may include a LiDAR 201 (e.g., the LiDAR 120 of FIG. 1), and/or a camera 211 (e.g., the camera 130 of FIG. 1).

A processor (e.g., the processor 110 in FIG. 1) of the vehicle control apparatus according to an embodiment may obtain a point cloud 203 through the LiDAR 201. For example, the processor may obtain a first sparse depth map 205 based on the point cloud 203.

In an embodiment, the processor may generate a short-range ground point cloud 221. For example, the short-range ground point cloud 221 may be obtained based on virtual points generated by the processor. For example, the short-range ground point cloud 221 may include virtual points corresponding to the ground included in blind spots.

In an embodiment, the processor may obtain a red green blue (RGB) image 213 through the camera 211. For example, the processor may obtain segmentation information 215 from the RGB image 213. For example, the processor may obtain the segmentation information 215 corresponding to each of pixels included in the RGB image 213. For example, the processor may obtain the segmentation information 215 indicating the type of each of the pixels included in the RGB image 213.

In an embodiment, the processor may obtain a second sparse depth map 217 based on the segmentation information 215 and the short-range ground point cloud 221.

In an embodiment, the processor may obtain a third sparse depth map 231 based on the first sparse depth map 205 and the second sparse depth map 217. For example, the processor may obtain the third sparse depth map 231 based on synthesizing the first sparse depth map 205 and the second sparse depth map 217.

For example, an operation of synthesizing the first sparse depth map 205 and the second sparse depth map 217 may include an operation of obtaining a sparse depth map using both a plurality of first points included in the first sparse depth map 205 and a plurality of second points included in the second sparse depth map 217. For example, the sparse depth map using both the plurality of first points included in the first sparse depth map 205 and the plurality of second points included in the second sparse depth map 217 may include a third sparse depth map.

In an embodiment, the processor may perform depth completion 233 based on the RGB image 213 and the third sparse depth map 231. For example, the processor may perform the depth completion 233 based on inputting the RGB image 213 and the third sparse depth map 231 into a first neural network model among neural network models stored in a memory (e.g., the memory 140 in FIG. 1).

In an embodiment, the processor may obtain a first dense depth map 235 based on performing the depth completion 233 by using the RGB image 213 and the third sparse depth map 231.

In an embodiment, the processor may identify the confidence (a confidence level) of each of points included in the first dense depth map 235. The processor may perform low-confidence depth removal 237 based on identifying the confidence of each of points included in the first dense depth map 235. For example, the low-confidence depth removal 237 may include a process of removing a point of which the confidence is less than reference confidence.

In an embodiment, the processor may perform sky area depth removal 239 based on performing the low-confidence depth removal 237. For example, the processor may identify the type of each of points based on the segmentation information 215. For example, the processor may determine whether the type of each of points included in the first dense depth map 235 is a designated type, based on the segmentation information 215. For example, the processor may remove at least one point, which is identified as the designated type, based on the fact that at least part of points, from which at least some of the points are removed by the low-confidence depth removal 237 and which are included in the first dense depth map 235, is a designated type. For example, the designated type may include sky.

In an embodiment, the processor may perform noise removal and ROI selection 241. For example, the processor may perform the noise removal and ROI selection 241 based on removing a point, of which confidence is less than the reference confidence, and removing a point identified as the designated type. For example, the ROI may include an area capable of being provided to a user through a display of a vehicle including the vehicle control apparatus.

In an embodiment, the processor may obtain a second dense depth map 243 based on performing the noise removal and ROI selection 241.

As mentioned above, the processor of the vehicle control apparatus according to an embodiment may train a second neural network model different from the first neural network model described above, based on the obtained second dense depth map 243. The processor may relatively accurately identify a distance between an external object and a vehicle if identifying the distance between the external object and the vehicle based on an image, by training the second neural network model based on the second dense depth map 243.

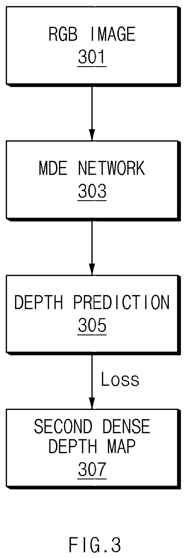

FIG. 3 shows an example, in which a vehicle control apparatus trains a neural network model, according to an embodiment of the present disclosure.

Referring to FIG. 3, a processor (e.g., the processor 110 of FIG. 1) of a vehicle control apparatus (e.g., the vehicle control apparatus 100 of FIG. 1) according to an embodiment may obtain an RGB image 301 through a camera (e.g., the camera 130 in FIG. 1).

In an embodiment, the processor may input an RGB image 301 to a MDE network 303. For example, the MDE network 303 may include a neural network model for identifying a distance between an external object and a host vehicle.

For example, the processor may perform depth prediction 305 based on inputting the RGB image 301 into the MDE network 303. For example, the depth prediction 305 may include a process of predicting the distance between a vehicle including the camera and the external object.

In an embodiment, the processor may obtain a depth map by performing the depth prediction 305 based on inputting the RGB image 301 into the MDE network 303. For example, the processor may obtain a depth map for expressing a three-dimensional space by inputting the RGB image 301 expressed in two dimensions into the MDE network 303.

In an embodiment, the processor may obtain a second dense depth map 307 based on a point cloud obtained through the LiDAR (e.g., the LiDAR 120 in FIG. 1) and an image obtained through the camera. For example, the second dense depth map 307 may be referred to as the second dense depth map 243 of FIG. 2.

In an embodiment, the processor may compare a depth map obtained through performing the depth prediction 305 with the second dense depth map 307. The processor may output a loss function based on comparing the depth map obtained through performing the depth prediction 305 with the second dense depth map 307. For example, the loss function may include a function for indicating a difference between a depth map obtained through performing the depth prediction 305 and the second dense depth map 307.

As mentioned above, the processor of the vehicle control apparatus according to an embodiment may train the MDE network 303 by using the second dense depth map 307. The processor may accurately identify and output the distance between the vehicle and the external object by using the RGB image 301 by training the MDE network 303 by using the second dense depth map 307.

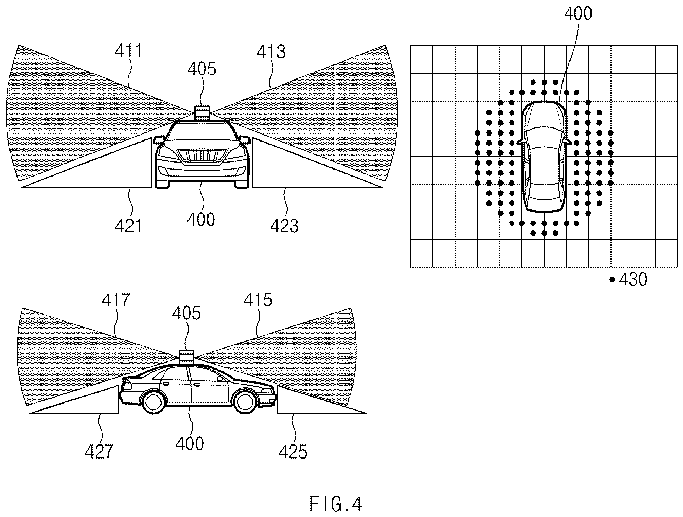

FIG. 4 shows an example of creating virtual points, in an embodiment of the present disclosure.

Referring to FIG. 4, a vehicle control apparatus (e.g., the vehicle control apparatus 100 of FIG. 1) according to an embodiment may be included in a vehicle 400. For example, the vehicle 400 may include a LiDAR 405.

In FIG. 4, at least one of a first area 411, a second area 413, a third area 415, or a fourth area 417, or any combination thereof may include an area where an external object is capable of being identified by the LiDAR 405. For example, if there is an external object in at least one of the first area 411, the second area 413, the third area 415, or the fourth area 417, or any combination thereof, a processor (e.g., the processor 110 in FIG. 1) may identify the external object through the LiDAR 405.

In FIG. 4, at least one of a first blind spot 421, a second blind spot 423, a third blind spot 435, and/or a fourth blind spot 427, may be an area where the external object is not identifiable by the LiDAR 405 (e.g., outside of the LiDAR's 405 range). In other words, the LiDAR 405 may be incapable of rendering the blind spots 421, 423, 438, 427. For example, if there is an external object in at least one of the first blind spot 421, the second blind spot 423, the third blind spot 435, or the fourth blind spot 427, or any combination thereof, the processor may not be able to identify the external object through the LiDAR 405.

Accordingly, because the processor is incapable of obtaining a point cloud associated with the ground identified in at least one of the first blind spot 421, the second blind spot 423, the third blind spot 435, or the fourth blind spot 427, or any combination thereof, the processor may generate virtual points 430 corresponding to the ground that is present in at least one of the first blind spot 421, the second blind spot 423, the third blind spot 435, or the fourth blind spot 427, or any combination thereof.

For example, the virtual points 430 may be created by the processor, and the processor may obtain a point cloud based on the generated virtual points 430. For example, the point cloud obtained based on the virtual points 430 may be referred to as the "short-range ground point cloud 221" in FIG. 2.

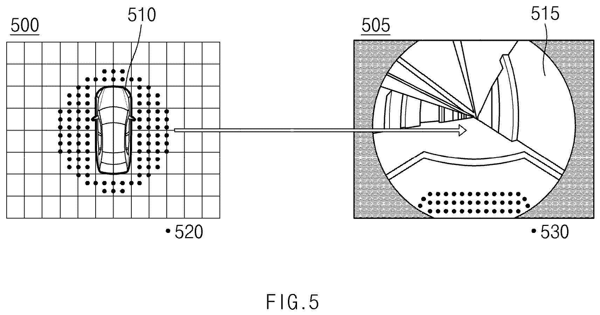

FIG. 5 shows an example of projecting created virtual points onto an image, in an embodiment of the present disclosure.

Referring to FIG. 5, in a first example 500, a processor (e.g., the processor 110 in FIG. 1) of a vehicle control apparatus (e.g., the vehicle control apparatus 100 in FIG. 1) according to an embodiment may generate virtual points 520 corresponding to the ground included in a blind spot of a LiDAR (e.g., the LiDAR 120 in FIG. 1, and/or the LiDAR 405 in FIG. 4) included in a host vehicle 510.

In a second example 505, the processor of the vehicle control apparatus according to an embodiment may project virtual points 530 as an image 515.

For example, the processor may convert the virtual points 520 expressed in a vehicle coordinate system and/or a point cloud formed by the virtual points 520 into points expressed in an image coordinate system.

For example, the processor may convert the virtual points 520 expressed in the vehicle coordinate system to the virtual points 530 expressed in the image coordinate system, based on equations below.

[Equation 1]

$$\begin{bmatrix} X_C \\ Y_C \\ Z_C \end{bmatrix} = \begin{bmatrix} R_{11}^{V \to C} & R_{12}^{V \to C} & R_{13}^{V \to C} \\ R_{21}^{V \to C} & R_{22}^{V \to C} & R_{23}^{V \to C} \\ R_{31}^{V \to C} & R_{32}^{V \to C} & R_{33}^{V \to C} \end{bmatrix} \begin{bmatrix} X_V \\ Y_V \\ Z_L = 0 \end{bmatrix} + \begin{bmatrix} T_1^{V \to C} \\ T_2^{V \to C} \\ T_3^{V \to C} \end{bmatrix}$$

[Equation 2]

$$\begin{bmatrix} X_C \\ Y_C \\ Z_C \end{bmatrix} = \begin{bmatrix} R_{11}^{V \to C} & R_{12}^{V \to C} & R_{13}^{V \to C} \\ R_{21}^{V \to C} & R_{22}^{V \to C} & R_{23}^{V \to C} \\ R_{31}^{V \to C} & R_{32}^{V \to C} & R_{33}^{V \to C} \end{bmatrix} \begin{bmatrix} X_V \\ Y_V \\ Z_L = 0 \end{bmatrix} + \begin{bmatrix} T_1^{V \to C} \\ T_2^{V \to C} \\ T_3^{V \to C} \end{bmatrix}$$

[Equation 3]

$$\begin{bmatrix} u \\ v \\ 1 \end{bmatrix} = \begin{bmatrix} f_x & 0 & c_x \\ 0 & f_y & c_y \\ 0 & 0 & 1 \end{bmatrix} \begin{bmatrix} X_{norm} \\ Y_{norm} \\ 1 \end{bmatrix}$$

In Equation 1, $R_{kl}^{V \to C}$ may denote rotating a vehicle coordinate system. For example, in $R_{kl}^{V \to C}$, 'k' may denote a row, and 'l' may denote a column. In Equation 1, $T_m^{V \to C}$ may mean moving the vehicle coordinate system. In $T_m^{V \to C}$, 'm' may denote a row.

In Equation 2, $Z_c$ may include a value of a z-axis of a plurality of surfaces split around a reference axis of a vehicle including the camera. In Equation 2, $\begin{bmatrix} X_c \\ Y_c \\ Z_c \end{bmatrix}$ may be obtained based on Equation 1. For example, the reference axis of the vehicle may include an axis perpendicular to the ground, based on a designated location of the vehicle. For example, the designated location of the vehicle may include a center point of a front bumper of the vehicle.

In an embodiment, the processor may obtain a matrix based on at least one of a focal length of the camera, a skew coefficient of the camera, or a main point of an image, or any combination thereof.

For example, in Equation 3, $f_x$ and/or $f_y$ may be associated with the focal length of the camera. For example, $f_x$ and/or $f_y$ may be obtained based on the focal length of the camera and/or a size ratio of the image sensor included in the camera.

For example, $f_x$ may be obtained based on the focal length of the camera and a size ratio of an image sensor in a horizontal direction. For example, $f_y$ may be obtained based on the focal length of the camera and a size ratio of an image sensor in a vertical direction.

For example, as $f_x$ and/or $f_y$ increases, a field of view (FOV) may decrease. As $f_x$ and/or $f_y$ decreases, the FOV may increase.

For example, in Equation 3, $c_x$ and/or $c_y$ may be associated with the main point of the image. For example, $c_x$ and/or $c_y$ may include values used to generate an actual image by capturing a specific part of the formed entire image.

For example, $c_x$ may include a value of an x-axis direction (i.e., the horizontal direction) used to obtain the actual image from the entire image. $c_y$ may include a value of a y-axis direction (i.e., the vertical direction) used to obtain the actual image from the entire image.

As mentioned above, the processor of the vehicle control apparatus according to an embodiment may convert a point cloud expressed in a vehicle coordinate system into points expressed in an image coordinate system based on Equations 1 to 3.

In an embodiment, the processor may generate a sparse depth map based on a point cloud converted into points expressed in the image coordinate system and a point cloud generated by the LiDAR. For example, the processor may obtain a sparse depth map based on synthesizing the point cloud converted into points expressed in the image coordinate system and the point cloud generated by the LiDAR.

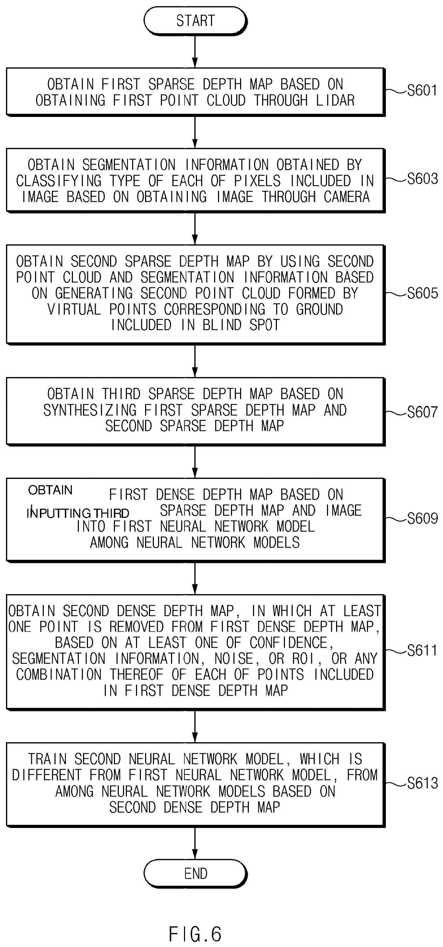

FIG. 6 shows an example of a flowchart associated with a vehicle control method, according to an embodiment of the present disclosure.

Hereinafter, it is assumed that the vehicle control apparatus 100 of FIG. 1 performs the process of FIG. 6. In addition, in a description of FIG. 6, it may be understood that an operation described as being performed by an apparatus is controlled by the processor 110 of the vehicle control apparatus 100.

At least one of operations of FIG. 6 may be performed by the vehicle control apparatus 100 of FIG. 1. At least one of operations of FIG. 6 may be performed by the processor 110 of FIG. 1. Each of the operations in FIG. 6 may be performed sequentially, but is not necessarily sequentially performed. For example, the order of operations may be changed, and at least two operations may be performed in parallel.

Referring to FIG. 6, in S601, a vehicle control method according to the claimed embodiment includes an operation of obtaining a first sparse depth map based on obtaining a first point cloud through a LiDAR.

For example, the vehicle control method may further include an operation of obtaining the first sparse depth map based on converting the first point cloud expressed in a LiDAR coordinate system based on a location of the LiDAR into points expressed in a camera coordinate system based on a location of the camera.

In S603, the vehicle control method according to the claimed embodiment includes an operation of obtaining segmentation information, which is obtained by classifying the type of each of pixels included in an image, based on obtaining the image through a camera.

In S605, the vehicle control method according to the claimed embodiment includes an operation of obtaining a second sparse depth map by using the second point cloud and the segmentation information based on generating the second point cloud formed by the virtual points corresponding to the ground included in a blind spot.

The blind spot includes an area of the ground incapable of being expressed by the LiDAR.

For example, the vehicle control method may include an operation of generating the virtual points with respect to the area of the ground incapable of being expressed by the LiDAR. For example, the vehicle control method may include an operation of generating a second point cloud based on generating virtual points with respect to the area of the ground incapable of being expressed by the LiDAR.

For example, the vehicle control method may include an operation of obtaining the second sparse depth map based on converting the second point cloud based on a vehicle coordinate system formed based on a vehicle into points expressed in a camera coordinate system based on a location of the camera.

In S607, the vehicle control method includes an operation of obtaining a third sparse depth map based on synthesizing the first sparse depth map and the second sparse depth map.

For example, the vehicle control method may include an operation of identifying a plurality of first points included in the first sparse depth map. For example, the vehicle control method may include an operation of identifying a plurality of second points included in the second sparse depth map.

For example, the vehicle control method may include an operation of selecting at least part of the plurality of first points, which overlap at least part of the plurality of second points, from among the plurality of first points as a first set.

For example, the vehicle control method may include an operation of selecting a plurality of second points that do not overlap with a plurality of first points as the second set.

For example, the vehicle control method may include an operation of obtaining a third sparse depth map based on the first set and the second set.

In S609, the vehicle control method according to the claimed embodiment includes an operation of obtaining a first dense depth map based on inputting the third sparse depth map and the image into the first neural network model among the neural network models.

In S611, the vehicle control method according to the claimed embodiment includes an operation of obtaining a second dense depth map, in which at least one point is removed from the first dense depth map, based on at least one of the confidence, the segmentation information, noise, or the ROI, or any combination thereof of each of the points included in the first dense depth map.

For example, the vehicle control method may include an operation of identifying the confidence of each of points included in the first dense depth map. The vehicle control method may include an operation of obtaining the second dense depth map based on removing a point, of which the confidence is less than reference confidence, from among the points included in the first dense depth map from the first dense depth map.

For example, the vehicle control method may include an operation of identifying at least one pixel with a designated type among a plurality of types based on the segmentation information in the first dense depth map. The vehicle control method may include an operation of obtaining the second dense depth map based on removing at least one point corresponding to at least one pixel with the designated type from the first dense depth map.

For example, the vehicle control method may include an operation of removing noise from the first dense depth map. The vehicle control method may include an operation of obtaining the second dense depth map based on selecting the ROI in the first dense depth map from which the noise is removed.

In S613, the vehicle control method includes an operation of training a second neural network model, which is different from the first neural network model, from among the neural network models based on the second dense depth map.

For example, the vehicle control method may include an operation of performing supervised learning using the second dense depth map as GT. For example, the vehicle control method may include an operation of training the second neural network model based on the supervised learning that uses the second dense depth map as GT.

The first neural network model uses the image and a third sparse depth map as inputs. The second neural network model includes an operation of outputting a depth map indicating the distance between objects displayed in the image and the vehicle including the camera, by using the image as an input. Based on the second neural network model, a vehicle (e.g., a vehicle on which the LiDAR and/or the camera is mounted) is controlled (e.g., accelerated, decelerated, steered, braked, etc.).

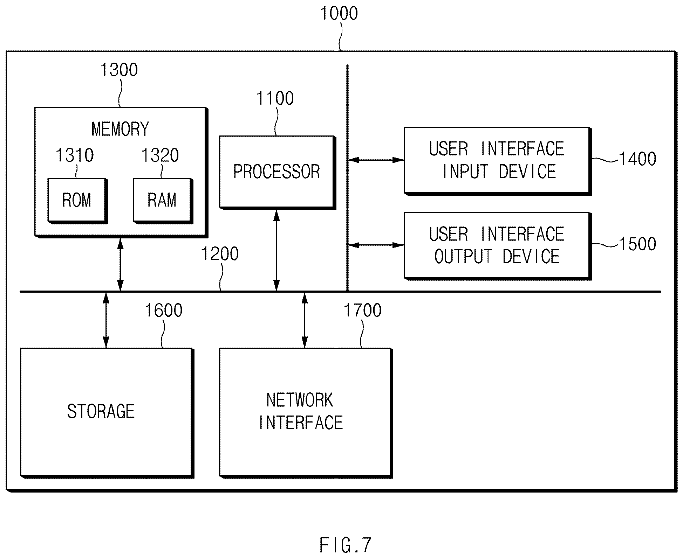

FIG. 7 shows a computing system associated with a vehicle control apparatus or vehicle control method, according to an embodiment of the present disclosure.

Referring to FIG. 7, a computing system 1000 may include at least one processor 1100, a memory 1300, a user interface input device 1400, a user interface output device 1500, a storage 1600, and a network interface 1700, which are connected with each other via a bus 1200.

The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read only memory (ROM) and a random access memory (RAM).

Accordingly, the operations of the method or algorithm described in connection with the embodiments disclosed in the specification may be directly implemented with a hardware module, a software module, or a combination of the hardware module and the software module, which is executed by the processor 1100. The software module may reside on a storage medium (i.e., the memory 1300 and/or the storage 1600) such as a random access memory (RAM), a flash memory, a read only memory (ROM), an erasable and programmable ROM (EPROM), an electrically EPROM (EEPROM), a register, a hard disk drive, a removable disc, or a compact disc-ROM (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

According to an aspect of the present disclosure, a vehicle control apparatus includes a memory in which neural network models are stored, a light detection and ranging (LiDAR), a camera, and a processor. The processor obtains a first sparse depth map based on obtaining a first point cloud through the LiDAR, obtains segmentation information obtained by classifying a type of each of pixels included in an image based on obtaining the image through the camera, obtains a second sparse depth map by using a second point cloud and the segmentation information based on generating the second point cloud formed by virtual points corresponding to a ground included in a blind spot, obtains a third sparse depth map based on synthesizing the first sparse depth map and the second sparse depth map, obtains a first dense depth map based on inputting the third sparse depth map and the image into a first neural network model among the neural network models, obtains a second dense depth map, in which at least one point is removed from the first dense depth map, based on at least one of confidence, segmentation information, noise, or region of interest (ROI), or any combination thereof of each of points included in the first dense depth map, and trains a second neural network model, which is different from the first neural network model, from among the neural network models based on the second dense depth map.

In an embodiment, the processor may obtain the first sparse depth map based on converting the first point cloud expressed in a LiDAR coordinate system based on a location of the LiDAR into points expressed in a camera coordinate system based on a location of the camera.

In an embodiment, the processor may obtain the second sparse depth map based on converting the second point cloud based on a vehicle coordinate system formed based on a vehicle into points expressed in a camera coordinate system based on a location of the camera.

In an embodiment, the processor may identify the confidence of each of the points included in the first dense depth map, and may obtain the second dense depth map based on removing a point, of which the confidence is less than reference confidence, from among the points included in the first dense depth map from the first dense depth map.

In an embodiment, the processor may identify at least one pixel with a designated type among a plurality of types based on the segmentation information in the first dense depth map, and may obtain the second dense depth map based on removing at least one point corresponding to at least one pixel with the designated type from the first dense depth map.

In an embodiment, the processor may remove the noise from the first dense depth map, and may obtain the second dense depth map based on selecting the ROI in the first dense depth map from which the noise is removed.

In the claimed embodiment, the blind spot includes an area, which is incapable of being expressed by the LiDAR, in the ground. The processor may generate the virtual points with respect to the area incapable of being expressed.

In an embodiment, the processor may identify a plurality of first points included in the first sparse depth map, may identify a plurality of second points included in the second sparse depth map, may select at least part of the plurality of first points, which overlap at least part of the plurality of second points, from among the plurality of first points as a first set, may select a plurality of second points, which do not overlap the plurality of first points, as a second set, and may obtain the third sparse depth map based on the first set and the second set.

In an embodiment, the processor may train the second neural network model based on supervised learning using the second dense depth map as ground truth (GT).

In the claimed embodiment, the first neural network model uses the image and the third sparse depth map as inputs. The second neural network model may output a depth map indicating a distance between objects expressed in the image and a vehicle including the camera, by using the image as an input.

According to an aspect of the present disclosure, a vehicle control method includes obtaining, by a processor, a first sparse depth map based on obtaining a first point cloud through a LiDAR, obtaining segmentation information obtained by classifying a type of each of pixels included in an image based on obtaining the image through a camera, obtaining a second sparse depth map by using a second point cloud and the segmentation information based on generating the second point cloud formed by virtual points corresponding to a ground included in a blind spot, obtaining a third sparse depth map based on synthesizing the first sparse depth map and the second sparse depth map, obtaining a first dense depth map based on inputting the third sparse depth map and the image into a first neural network model among neural network models, obtaining a second dense depth map, in which at least one point is removed from the first dense depth map, based on at least one of confidence, segmentation information, noise, or ROI, or any combination thereof of each of points included in the first dense depth map, and training a second neural network model, which is different from the first neural network model, from among the neural network models based on the second dense depth map.

According to an embodiment, the vehicle control method may further include obtaining the first sparse depth map based on converting the first point cloud expressed in a LiDAR coordinate system based on a location of the LiDAR into points expressed in a camera coordinate system based on a location of the camera.

According to an embodiment, the vehicle control method may further include obtaining the second sparse depth map based on converting the second point cloud based on a vehicle coordinate system formed based on a vehicle into points expressed in a camera coordinate system based on a location of the camera.

According to an embodiment, the vehicle control method may further include identifying the confidence of each of the points included in the first dense depth map, and obtaining the second dense depth map based on removing a point, of which the confidence is less than reference confidence, from among the points included in the first dense depth map from the first dense depth map.

According to an embodiment, the vehicle control method may further include identifying at least one pixel with a designated type among a plurality of types based on the segmentation information in the first dense depth map, and obtaining the second dense depth map based on removing at least one point corresponding to at least one pixel with the designated type from the first dense depth map.

According to an embodiment, the vehicle control method may further include removing the noise from the first dense depth map, and obtaining the second dense depth map based on selecting the ROI in the first dense depth map from which the noise is removed.

In the claimed embodiment, the blind spot includes an area, which is incapable of being expressed by the LiDAR, in the ground. The vehicle control method may further include generating the virtual points with respect to the area incapable of being expressed.

According to an embodiment, the vehicle control method may further include identifying a plurality of first points included in the first sparse depth map, identifying a plurality of second points included in the second sparse depth map, selecting at least part of the plurality of first points, which overlap at least part of the plurality of second points, from among the plurality of first points as a first set, selecting a plurality of second points, which do not overlap the plurality of first points, as a second set, and obtaining the third sparse depth map based on the first set and the second set.

According to an embodiment, the vehicle control method may further include training the second neural network model based on supervised learning using the second dense depth map as GT.

In the claimed embodiment, the first neural network model uses the image and the third sparse depth map as inputs. The second neural network model may output a depth map indicating a distance between objects expressed in the image and a vehicle including the camera, by using the image as an input.

The above description is merely an example of the technical idea of the present disclosure, and various modifications and modifications may be made by one skilled in the art without departing from the essential characteristic of the present disclosure.

Accordingly, embodiments of the present disclosure are intended not to limit but to explain the technical idea of the present invention. The scope of protection of the present invention is defined by the attached claims.

The present technology may improve training and/or inference of a neural network model (e.g., a MDE network).

The present technology may accurately predict a distance between a vehicle and an external object by using an image obtained through a camera, by creating virtual points in blind spots of a LiDAR and training a neural network model by using a point cloud by the created virtual points.

The present technology may obtain a dense depth map for effectively training the neural network model.

Besides, a variety of effects directly or indirectly understood through the present disclosure may be provided.


**Claims**

1. A vehicle control apparatus comprising:

   a memory (140) storing neural network models;
   a light detection and ranging, LiDAR, device (120);
   a camera (130); and
   a processor (110),
   wherein the processor (110) is configured to:

      obtain, via the LiDAR device (120), a first point cloud;

generate, based on the first point cloud, a first sparse depth map;
obtain, via the camera (130), an image;
generate segmentation information by classifying a type of pixels included in the image;
generate a second point cloud by forming virtual points corresponding to ground pixels included in a LiDAR blind spot;
generate, based on the second point cloud and the segmentation information, a second sparse depth map;
generate, by combining the first sparse depth map and the second sparse depth map, a third sparse depth map;
input the third sparse depth map and the image into a first neural network model, among the neural network models stored in the memory, to generate a
first dense depth map;
generate a second dense depth map by removing points from the first dense depth map, based on identifying, for each point included in the first dense depth map,
at least one of (i) a confidence level, (ii) segmentation information, (iii) a noise, or (iv) a region of interest, ROI;
train, using the second dense depth map as ground truth, a second neural network model, from among the neural network models stored in the memory, which is different from the first neural network model; and
obtain, by inputting the image into the trained second neural network model, depth information indicating a distance between the vehicle and an external object; and control the vehicle based on the depth information,
wherein the sparse depth map means that depth values are defined for only a subset of image pixels, the dense depth map means that depth values are defined for substantially all image pixels, and the LiDAR blind spot means an area of the ground for which the LiDAR device (120) provides no point measurements.

2. The vehicle control apparatus of claim 1, wherein the processor (110) is configured to generate the first sparse depth map by:
converting the first point cloud, which is expressed in a LiDAR device coordinate system based on a location of the LiDAR device (120), into points expressed in a camera coordinate system based on a location of the camera (130).

3. The vehicle control apparatus of claim 1, wherein the processor (110) is configured to generate the second sparse depth map by:
converting the second point cloud, which is expressed in a vehicle coordinate system for the vehicle, into points expressed in a camera coordinate system based on a location of the camera (130).

4. The vehicle control apparatus of claim 1, wherein the processor (110) is configured to generate the second dense depth map by:
removing, from the first dense depth map, a point, of which the confidence level is less than a threshold value, from among points included in the first dense depth map.

5. The vehicle control apparatus of claim 1, wherein the processor (110) is configured to generate the second dense depth map by:

determining, in the first dense depth map, at least one pixel associated with a designated type among a plurality of types based on the segmentation information; and
removing, from the first dense depth map, at least one point corresponding to the at least one pixel associated with the designated type.

6. The vehicle control apparatus of claim 1, wherein the processor (110) is configured to generate the second dense depth map by:

removing noise from the first dense depth map; and
selecting an ROI in the first dense map from which the noise is removed.

7. The vehicle control apparatus of claim 1,
wherein the processor (110) is further configured to:
identify ground pixels as the type of pixels included in the image.

8. The vehicle control apparatus of claim 1, wherein the processor (110) is configured to generate the third sparse depth map by:

determining a plurality of first points included in the first sparse depth map;

determining a plurality of second points included in the second sparse depth map;

selecting at least part of the plurality of first points, which overlap at least part of the plurality of second points, as a first set;

selecting a remaining part of the plurality of second points, which do not overlap the first set, as a second set; and

generating the third sparse depth map further based on the first set and the second set.

9. The vehicle control apparatus of claim 1, wherein the processor (110) is configured to train the second neural network model by:

training the second neural network model further based on supervised learning using the second dense depth map as ground truth, GT.

10. The vehicle control apparatus of claim 1,

wherein the second neural network model outputs, using the image as an input, a depth map indicating a distance between objects, included in the image, and the vehicle.

11. A method comprising:

generating, by a processor (110), a first sparse depth map based on a first point cloud obtained through a LiDAR device (120);

obtaining, via the camera (130), an image;

generating segmentation information by classifying a type of pixels included in the image obtained via a camera (130);

generating a second point cloud by forming virtual points corresponding to ground pixels included in a LiDAR blind spot ;

generating, based on the second point cloud and the segmentation information, a second sparse depth map;

generating, by combining the first sparse depth map and the second sparse depth map, a third sparse depth map;

inputting the third sparse depth map and the image into a first neural network model to generate a first dense depth map; generating a second dense depth map by removing points from the first

dense depth map, based on identifying, for each point included in the first dense depth map, at least one of (i) a confidence level, (ii) segmentation information, (iii) a noise, or (iv) a region of interest, ROI;

training, using the second dense depth map as ground truth, a second neural network model, which is different from the first neural network model; and

obtaining, by inputting the image into the trained second neural network model, depth information indicating a distance between the vehicle and an external object, and controlling the vehicle based on the depth information, wherein the sparse depth map means that depth values are defined for only a subset of image pixels, the dense depth map means that depth values are defined for substantially all image pixels, and the LiDAR blind spot means an area of the ground for which the LiDAR device (120) provides no point measurements.

12. The method of claim 11, further comprising:

converting the first point cloud, which is expressed in a LiDAR device coordinate system based on a location of the LiDAR device (120), into points expressed in a camera coordinate system based on a location of the camera (130).

13. The method of claim 11, further comprising:

converting the second point cloud, which is expressed in a vehicle coordinate system for the vehicle, into points expressed in a camera coordinate system based on a location of the camera (130).

14. The method of claim 11, further comprising:

removing, from the first dense depth map, a point, of which the confidence level is less than a threshold value, from among points included in the first dense depth map.

15. The method of claim 11, further comprising:

determining, in the first dense depth map, at least one pixel associated with a designated type among a plurality of types based on the segmentation information; and

removing, from the first dense depth map, at least one point corresponding to the at least one pixel associated with the designated type.

**Patentansprüche**

1. Fahrzeugsteuereinrichtung, umfassend:

ein Speicher (140) zum Speichern eines neuronalen Netzwerkmodels;
eine Lichtdetektions- und Entfernungsmessvorrichtung, LiDAR, (120);
eine Kamera (130); und
einen Prozessor (110),
wobei der Prozessor (110) ausgebildet ist, zu Folgendem:

Erhalten, über die LiDAR-Vorrichtung (120), einer ersten Punktwolke;
Erzeugen, basierend auf der ersten Punktwolke, einer ersten spärlichen Tiefenkarte;
Erhalten, über die Kamera (130), eines Bildes;
Erzeugen von Segmentierungsinformationen, indem eine bestimmte Art von im Bild eingeschlossenen Pixeln klassifiziert wird;
Erzeugen einer zweiten Punktwolke, durch Bilden virtueller Punkte, die den Bodenpixeln entsprechen, die in einem toten Winkel für das LiDAR eingeschlossen sind;
Erzeugen, basierend auf der zweiten Punktwolke und den Segmentierungsinformationen, einer zweiten spärlichen Tiefenkarte;
Erzeugen durch Kombination der ersten spärlichen Tiefenkarte und der zweiten spärlichen Tiefenkarte einer dritten spärlichen Tiefenkarte;
Eingeben der dritten spärlichen Tiefenkarte und des Bildes in ein erstes neuronales Netzwerkmodell aus den im Speicher gespeicherten neuronalen Netzwerkmodellen, um eine erste dichte Tiefenkarte zu erzeugen;
Erzeugen einer zweiten dichten Tiefenkarte, indem Punkte aus der ersten dichten Tiefenkarte entfernt werden, und zwar basierend auf der Identifizierung für jeden in der ersten dichten Tiefenkarte eingeschlossenen Punkt,
mindestens eines der folgenden Elemente: (i) ein Konfidenzniveau, (ii) Segmentierungsinformationen, (iii) ein Rauschen oder (iv) ein Bereich von Interesse, ROI;
Trainieren unter Verwendung der zweiten dichten Tiefenkarte als Referenzdaten ein zweites neuronales Netzwerkmodell aus den im Speicher gespeicherten neuronalen Netzwerkmodellen, das sich vom ersten neuronalen Netzwerkmodell unterscheidet; und
Erhalten, durch Eingeben des Bildes in das trainierte zweite neuronale Netzwerkmodell, von Tiefeninformationen, die den Abstand zwischen dem Fahrzeug und einem externen Objekt angeben; und Steuern des Fahrzeugs, basierend auf diesen Tiefeninformationen, wobei die spärliche Tiefenkarte bedeutet, dass Tiefenwerte nur für eine Teilmenge der Bildpixel definiert sind, die dichte Tiefenkarte bedeutet, dass Tiefenwerte für im Wesentlichen alle Bildpixel definiert sind, und der tote Winkel für das LiDAR einen Bereich des Bodens bezeichnet, für den die LiDAR-Vorrichtung (120) keine Punktmessungen liefert.

2. Fahrzeugsteuereinrichtung nach Anspruch 1, wobei der Prozessor (110) ausgebildet ist, die erste spärliche Tiefenkarte zu erzeugen, durch Folgendes:
Umwandeln der ersten Punktwolke, die in einem auf dem Standort der LiDAR-Vorrichtung (120) basierenden LiDAR-Vorrichtungskoordinatensystem ausgedrückt ist, in Punkte, die in einem auf dem Standort der Kamera (130) basierenden Kamerakoordinatensystem ausgedrückt sind.

3. Fahrzeugsteuereinrichtung nach Anspruch 1, wobei der Prozessor (110) ausgebildet ist, um die zweite spärliche Tiefenkarte zu erzeugen, durch Folgendes:
Umwandeln der zweiten Punktwolke, die in einem Fahrzeugkoordinatensystem für das Fahrzeug ausgedrückt ist, in Punkte, die in einem Kamerakoordinatensystem, basierend auf der Position der Kamera (130) ausgedrückt sind.

4. Fahrzeugsteuereinrichtung nach Anspruch 1, wobei der Prozessor (110) ausgebildet ist, um die zweite dichte Tiefenkarte zu erzeugen, durch Folgendes:
Entfernen eines Punkts aus der ersten dichten Tiefenkarte, dessen Konfidenzniveau unter einem Schwellenwert aus der Menge der in der ersten dichten Tiefenkarte eingeschlossenen Punkte liegt.

5. Fahrzeugsteuereinrichtung nach Anspruch 1, wobei der Prozessor (110) ausgebildet ist, um die zweite dichte Tiefenkarte zu erzeugen, durch Folgendes:

Ermitteln mindestens eines Pixels in der ersten dichten Tiefenkarte, das einem bestimmten Typ aus einer Vielzahl von Typen zugeordnet ist, basierend auf Segmentierungsinformationen; und

Entfernen mindestens eines Punkts aus der ersten dichten Tiefenkarte, der dem mindestens einen Pixel entspricht, der dem festgelegten Typ zugeordnet ist.

6. Fahrzeugsteuereinrichtung nach Anspruch 1, wobei der Prozessor (110) ausgebildet ist, um die zweite dichte Tiefenkarte zu erzeugen, durch Folgendes:
Entfernen von Rauschen aus der ersten dichten Tiefenkarte; und Auswählen eines ROI in der ersten dichten Karte, aus dem das Rauschen entfernt wird.

7. Fahrzeugsteuereinrichtung nach Anspruch 1, wobei der Prozessor (110) weiter ausgebildet ist, zu Folgendem:
Identifizieren von Bodenpixeln als den im Bild eingeschlossenen Pixeltyp.

8. Fahrzeugsteuereinrichtung nach Anspruch 1, wobei der Prozessor (110) ausgebildet ist, um die dritte spärliche Tiefenkarte zu erzeugen, durch Folgendes:

Bestimmen einer Vielzahl von ersten Punkten, die in der ersten spärlichen Tiefenkarte eingeschlossen sind;
Bestimmen einer Vielzahl von zweiten Punkten, die in der zweiten spärlichen Tiefenkarte eingeschlossen sind;
Auswählen mindestens eines Teils der Vielzahl erster Punkte, die sich mit mindestens einem Teil der Vielzahl zweiter Punkte überschneiden, als erste Menge;
Auswählen eines verbleibenden Teils der Vielzahl von zweiten Punkten, die sich nicht mit der ersten Menge überschneiden, als zweite Menge; und
Erzeugen der dritten spärlichen Tiefenkarte, basierend auf der ersten und der zweiten Menge.

9. Fahrzeugsteuereinrichtung nach Anspruch 1, wobei der Prozessor (110) ausgebildet ist, um das zweite neuronale Netzwerkmodell zu trainieren, durch Folgendes:
Weiter Trainieren des zweiten neuronalen Netzwerkmodells basierend auf dem überwachten Lernen, wobei die zweite dichte Tiefenkarte als Referenzwert (GT) verwendet wird.

10. Fahrzeugsteuereinrichtung nach Anspruch 1,
wobei das zweite neuronale Netzwerkmodell unter Verwendung des Bildes als Eingabe eine Tiefenkarte ausgibt, die den Abstand zwischen den im Bild eingeschlossenen Objekten und dem Fahrzeug angibt.

11. Verfahren, umfassend:

Erzeugen, durch einen Prozessor (110), einer ersten spärlichen Tiefenkarte, basierend auf einer ersten Punktwolke, die mittels einer LiDAR-Vorrichtung (120) erhalten wurde;
Erfassen eines Bildes über die Kamera (130);
Erzeugen von Segmentierungsinformationen durch Klassifizierung einer Art von Pixeln, die in dem über eine Kamera (130) aufgenommenen Bild eingeschlossen sind;
Erzeugen einer zweiten Punktwolke durch Bilden virtueller Punkte, die den Bodenpixeln entsprechen, die in einem toten Winkel für das LiDAR eingeschlossen sind;
Erzeugen, basierend auf einer zweiten Punktwolke und den Segmentierungsinformationen, einer zweiten spärlichen Tiefenkarte ;
Erzeugen, durch Kombinieren der ersten spärlichen Tiefenkarte und der zweiten spärlichen Tiefenkarte, einer dritten spärlichen Tiefenkarte ;
Eingeben der dritten spärlichen Tiefenkarte und des Bildes in ein erstes neuronales Netzwerkmodell, um eine erste dichte Tiefenkarte zu erzeugen; Erzeugen einer zweiten dichten Tiefenkarte durch Entfernen von Punkten aus der ersten dichten Tiefenkarte,
basierend auf der Identifizierung für jeden in der ersten dichten Tiefenkarte eingeschlossenen Punkt,
mindestens eines von (i) einem Konfidenzniveau, (ii) Segmentierungsinformationen, (iii) einem Geräusch oder (iv) einem Bereich von Interesse, ROI;
Trainieren, unter Verwendung der zweiten dichten Tiefenkarte als Referenz, eines zweiten neuronalen Netzmodells, das sich vom ersten neuronalen Netzmodell unterscheidet; und Erhalten, durch Eingeben des Bildes in das trainierte zweite neuronale Netzwerkmodell, von Tiefeninformationen, die den Abstand zwischen dem Fahrzeug und einem externen Objekt angeben und Steuern des Fahrzeugs, basierend auf den Tiefeninformationen, wobei die spärliche Tiefenkarte bedeutet, dass Tiefenwerte nur für eine Teilmenge der Bildpixel definiert sind, die dichte Tiefenkarte bedeutet, dass Tiefenwerte für im Wesentlichen alle Bildpixel definiert sind, und der tote Winkel für das LiDAR einen Bereich des Bodens bezeichnet, für den die LiDAR-Vorrichtung (120) keine Punktmessungen liefert.

12. Verfahren nach Anspruch 11, weiter umfassend:
Umwandeln der ersten Punktwolke, die in einem auf dem Standort der LiDAR-Vorrichtung (120) basierenden LiDAR-Vorrichtungskoordinatensystem ausgedrückt ist, in Punkte, die in einem auf dem Standort der Kamera (130) basierenden Kamerakoordinatensystem ausgedrückt sind.

13. Verfahren nach Anspruch 11, weiter umfassend:
Umwandeln der zweiten Punktwolke, die in einem Fahrzeugkoordinatensystem für das Fahrzeug ausgedrückt ist, in Punkte, die in einem Kamerakoordinatensystem, basierend auf der Position der Kamera (130), ausgedrückt sind.

14. Verfahren nach Anspruch 11, weiter umfassend:
Entfernen eines Punkts aus der ersten dichten Tiefenkarte, dessen Konfidenzniveau unter einem Schwellenwert aus der Menge der in der ersten dichten Tiefenkarte eingeschlossenen Punkte liegt.

15. Verfahren nach Anspruch 11, weiter umfassend:

Ermitteln mindestens eines Pixels in der ersten dichten Tiefenkarte, das einem bestimmten Typ aus einer Vielzahl von Typen zugeordnet ist, basierend auf Segmentierungsinformationen; und
Entfernen mindestens eines Punkts aus der ersten dichten Tiefenkarte, der dem mindestens einen Pixel entspricht, der dem festgelegten Typ zugeordnet ist.

**Revendications**

1. Appareil de commande de véhicule comprenant :

une mémoire (140) stockant des modèles de réseau neuronal ;
un dispositif (120) de détection et de télémétrie par la lumière, LiDAR ;
une caméra (130) ; et
un processeur (110),
dans lequel le processeur (110) est configuré pour :

obtenir, via le dispositif LiDAR (120), un premier nuage de points ;
générer, sur la base du premier nuage de points, une première carte de profondeur éparse ;
obtenir, via la caméra (130), une image ;
générer des informations de segmentation en classant un type de pixels inclus dans l'image ;
générer un deuxième nuage de points en formant des points virtuels correspondant à des pixels de terre inclus dans un angle mort LiDAR ;
générer, sur la base du deuxième nuage de points et des informations de segmentation, une deuxième carte de profondeur éparse ;
générer, en combinant la première carte de profondeur éparse et la deuxième carte de profondeur éparse, une troisième carte de profondeur éparse ;
entrer la troisième carte de profondeur éparse et l'image dans un premier modèle de réseau neuronal, parmi les modèles de réseau neuronal stockés dans la mémoire,
pour générer une première carte de profondeur dense ;
générer une deuxième carte de profondeur dense en supprimant des points de la première carte de profondeur dense, sur la base de l'identification, pour chaque point inclus dans la première carte de profondeur dense, d'au moins un parmi (i) un niveau de confiance, (ii) des informations de segmentation, (iii) un bruit, ou (iv) une région d'intérêt, ROI ;
entraîner, en utilisant la deuxième carte de profondeur dense comme vérité terre, un deuxième modèle de réseau neuronal, parmi les modèles de réseau neuronal stockés dans la mémoire, qui est différent du premier modèle de réseau neuronal ; et obtenir, en entrant l'image dans le deuxième modèle de réseau neuronal entraîné, des informations de profondeur indiquant une distance entre le véhicule et un objet externe ; et commander le véhicule sur la base des informations de profondeur,
dans lequel la carte de profondeur éparse signifie que des valeurs de profondeur sont définies pour un sous-ensemble de pixels d'image uniquement, la carte de profondeur dense signifie que des valeurs de profondeur sont définies pour sensiblement tous les pixels d'image, et l'angle mort LiDAR signifie une zone de la terre pour laquelle le dispositif LiDAR (120) ne fournit aucune mesure de point.

2.  Appareil de commande de véhicule selon la revendication 1, dans lequel le processeur (110) est configuré pour générer la première carte de profondeur éparse par :
la conversion du premier nuage de points, qui est exprimé dans un système de coordonnées de dispositif LiDAR sur la base d'un emplacement du dispositif LiDAR (120), en points exprimés dans un système de coordonnées de caméra sur la base d'un emplacement de la caméra (130).

3.  Appareil de commande de véhicule selon la revendication 1, dans lequel le processeur (110) est configuré pour générer la deuxième carte de profondeur éparse par :
la conversion du deuxième nuage de points, qui est exprimé dans un système de coordonnées de véhicule pour le véhicule, en points exprimés dans un système de coordonnées de caméra sur la base d'un emplacement de la caméra (130).

4.  Appareil de commande de véhicule selon la revendication 1, dans lequel le processeur (110) est configuré pour générer la deuxième carte de profondeur dense par :
la suppression, à partir de la première carte de profondeur dense, d'un point, dont le niveau de confiance est inférieur à une valeur seuil, parmi des points inclus dans la première carte de profondeur dense.

5.  Appareil de commande de véhicule selon la revendication 1, dans lequel le processeur (110) est configuré pour générer la deuxième carte de profondeur dense par :

la détermination, dans la première carte de profondeur dense, d'au moins un pixel associé à un type désigné parmi une pluralité de types sur la base des informations de segmentation ; et
la suppression, à partir de la première carte de profondeur dense, d'au moins un point correspondant à l'au moins un pixel associé au type désigné.

6.  Appareil de commande de véhicule selon la revendication 1, dans lequel le processeur (110) est configuré pour générer la deuxième carte de profondeur dense par :

la suppression d'un bruit à partir de la première carte de profondeur dense ; et
la sélection d'une ROI dans la première carte dense à partir de laquelle le bruit est supprimé.

7.  Appareil de commande de véhicule selon la revendication 1, dans lequel le processeur (110) est en outre configuré pour :
identifier des pixels de terre comme le type de pixels inclus dans l'image.

8.  Appareil de commande de véhicule selon la revendication 1, dans lequel le processeur (110) est configuré pour générer la troisième carte de profondeur éparse par :

la détermination d'une pluralité de premiers points inclus dans la première carte de profondeur éparse ;
la détermination d'une pluralité de deuxièmes points inclus dans la deuxième carte de profondeur éparse ;
la sélection d'au moins une partie de la pluralité de premiers points, qui chevauchent au moins une partie de la pluralité de deuxièmes points, comme un premier ensemble ;
la sélection d'une partie restante de la pluralité de deuxièmes points, qui ne chevauchent pas le premier ensemble, comme un deuxième ensemble ; et
la génération de la troisième carte de profondeur éparse en outre sur la base du premier ensemble et du deuxième ensemble.

9.  Appareil de commande de véhicule selon la revendication 1, dans lequel le processeur (110) est configuré pour entraîner le deuxième modèle de réseau neuronal par :
l'entraînement en outre du deuxième modèle de réseau neuronal sur la base d'un apprentissage supervisé en utilisant la deuxième carte de profondeur dense comme vérité terre, GT.

10. Appareil de commande de véhicule selon la revendication 1,
dans lequel le deuxième modèle de réseau neuronal délivre en sortie, en utilisant l'image comme entrée, une carte de profondeur indiquant une distance entre des objets, inclus dans l'image, et le véhicule.

**11.** Procédé comprenant :

la génération, par un processeur (110), d'une première carte de profondeur éparse sur la base d'un premier nuage de points obtenu par l'intermédiaire d'un dispositif LiDAR (120) ;

l'obtention, via la caméra (130), d'une image ;

la génération d'informations de segmentation en classifiant un type de pixels inclus dans l'image obtenue via une caméra (130) ;

la génération d'un deuxième nuage de points en formant des points virtuels correspondant à des pixels de terre inclus dans un angle mort LiDAR ;

la génération, sur la base du deuxième nuage de points et des informations de segmentation, d'une deuxième carte de profondeur éparse ;

la génération, en combinant la première carte de profondeur éparse et la deuxième carte de profondeur éparse, d'une troisième carte de profondeur éparse ;

l'entrée de la troisième carte de profondeur éparse et de l'image dans un premier modèle de réseau neuronal pour générer une première carte de profondeur dense ; la génération d'une deuxième carte de profondeur dense en supprimant des points de la première carte de profondeur dense, sur la base de l'identification, pour chaque point inclus dans la première carte de profondeur dense, d'au moins un parmi (i) un niveau de confiance, (ii) des informations de segmentation, (iii) un bruit, ou (iv) une région d'intérêt, ROI ;

l'entraînement, en utilisant la deuxième carte de profondeur dense comme vérité terre, d'un deuxième modèle de réseau neuronal, qui est différent du premier modèle de réseau neuronal ; et

l'obtention, en entrant l'image dans le deuxième modèle de réseau neuronal entraîné, d'informations de profondeur indiquant une distance entre le véhicule et un objet externe, et la commande du véhicule sur la base des informations de profondeur,

dans lequel la carte de profondeur éparse signifie que des valeurs de profondeur sont définies pour un sous-ensemble de pixels d'image uniquement, la carte de profondeur dense signifie que des valeurs de profondeur sont définies pour sensiblement tous les pixels d'image, et l'angle mort LiDAR signifie une zone de la terre pour laquelle le dispositif LiDAR (120) ne fournit aucune mesure de point.

**12.** Procédé selon la revendication 11, comprenant en outre :
la conversion du premier nuage de points, qui est exprimé dans un système de coordonnées de dispositif LiDAR sur la base d'un emplacement du dispositif LiDAR (120), en points exprimés dans un système de coordonnées de caméra sur la base d'un emplacement de la caméra (130).

**13.** Procédé selon la revendication 11, comprenant en outre :
la conversion du deuxième nuage de points, qui est exprimé dans un système de coordonnées de véhicule pour le véhicule, en points exprimés dans un système de coordonnées de caméra sur la base d'un emplacement de la caméra (130).

**14.** Procédé selon la revendication 11, comprenant en outre :
la suppression, à partir de la première carte de profondeur dense, d'un point, dont le niveau de confiance est inférieur à une valeur seuil, parmi des points inclus dans la première carte de profondeur dense.

**15.** Procédé selon la revendication 11, comprenant en outre :

la détermination, dans la première carte de profondeur dense, d'au moins un pixel associé à un type désigné parmi une pluralité de types sur la base des informations de segmentation ; et

la suppression, à partir de la première carte de profondeur dense, d'au moins un point correspondant à l'au moins un pixel associé au type désigné.

VEHICLE CONTROL APPARATUS
100

PROCESSOR
110

LIDAR
120

CAMERA
130

MEMORY
140

FIG.1

FIG.2

```
┌─────────────────────┐
│     RGB IMAGE       │
│       301           │
└─────────────────────┘
          │
          ▼
┌─────────────────────┐
│    MDE NETWORK      │
│       303           │
└─────────────────────┘
          │
          ▼
┌─────────────────────┐
│  DEPTH PREDICTION   │
│       305           │
└─────────────────────┘
          │ Loss
          ▼
┌─────────────────────┐
│   SECOND DENSE      │
│    DEPTH MAP        │
│       307           │
└─────────────────────┘
```

FIG.3

FIG.4

FIG.5

START

OBTAIN FIRST SPARSE DEPTH MAP BASED ON
OBTAINING FIRST POINT CLOUD THROUGH LIDAR — S601

OBTAIN SEGMENTATION INFORMATION OBTAINED BY
CLASSIFYING TYPE OF EACH OF PIXELS INCLUDED IN
IMAGE BASED ON OBTAINING IMAGE THROUGH CAMERA — S603

OBTAIN SECOND SPARSE DEPTH MAP BY USING SECOND
POINT CLOUD AND SEGMENTATION INFORMATION BASED
ON GENERATING SECOND POINT CLOUD FORMED BY
VIRTUAL POINTS CORRESPONDING TO GROUND
INCLUDED IN BLIND SPOT — S605

OBTAIN THIRD SPARSE DEPTH MAP BASED ON
SYNTHESIZING FIRST SPARSE DEPTH MAP AND
SECOND SPARSE DEPTH MAP — S607

OBTAIN FIRST DENSE DEPTH MAP BASED ON
INPUTTING THIRD SPARSE DEPTH MAP AND IMAGE
INTO FIRST NEURAL NETWORK MODEL
AMONG NEURAL NETWORK MODELS — S609

OBTAIN SECOND DENSE DEPTH MAP, IN WHICH AT LEAST
ONE POINT IS REMOVED FROM FIRST DENSE DEPTH MAP,
BASED ON AT LEAST ONE OF CONFIDENCE,
SEGMENTATION INFORMATION, NOISE, OR ROI, OR ANY
COMBINATION THEREOF OF EACH OF POINTS INCLUDED
IN FIRST DENSE DEPTH MAP — S611

TRAIN SECOND NEURAL NETWORK MODEL, WHICH IS
DIFFERENT FROM FIRST NEURAL NETWORK MODEL, FROM
AMONG NEURAL NETWORK MODELS BASED ON
SECOND DENSE DEPTH MAP — S613

END

FIG.6

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240029182

**Non-patent literature cited in the description**

- **DHAKAL SUDIP et al.** VirtualPainting: Addressing Sparsity with Virtual Points and Distance-Aware Data Augmentation for 3D Object Detection. *arXiv.org*, 26 December 2023, 1-10

- Multi-Task Multi-Sensor Fusion for 3D Object Detection. **LIANG MING et al.** 2019 IEEE/CVF CONFERENCE ON COMPUTER VISION AND PATTERN RECOGNITION (CVPR). IEEE, 15 June 2019, 7337-7345